# FASCICULE DE BREVET EUROPEEN

(11) **EP 3 381 575 B1**
(45) Date de publication et mention de la délivrance du brevet: **05.05.2021**
(21) Numéro de dépôt: 18163003.9
(22) Date de dépôt: 21.03.2018
(51) Int. Cl.: B09B 3/00, B09B 5/00, C05F 3/00, C05F 17/50, C02F 11/04

(54) **PROCEDE DE TRAITEMENT DE DECHETS ORGANIQUES BIODEGRADABLES ET DISPOSITIF POUR SA MISE EN OEUVRE**
BIOLOGISCH ABBAUBAREN ORGANISCHEN ABFÄLLEN VERARBEITUNGSVERFAHREN UND ENTSPRECHENDE VORRICHTUNG
BIODEGRADABLE ORGANIC WASTE PROCESSING SYSTEM AND ASSOCIATED APPARATUS

(30) Priorité: 29.03.2017 FR 1752621
(43) Date de publication de la demande: 03.10.2018
(73) Titulaire: SAS Adour Methanisation, 40800 Aire sur l'Adour (FR)
(72) Inventeur: LABAT, Xavier, 40000 Mont de Marsan (FR)
(74) Mandataire: Fantin, Laurent

(56) Documents cités:
- WO-A2-03/043939
- JP-B2- 3 893 654
- US-A1- 2010 267 102

## Description

La présente demande se rapporte à un procédé de traitement de déchets organiques biodégradables ainsi qu'à un dispositif pour sa mise en œuvre.

Les déchets organiques biodégradables concernés sont d'origines animale (viandes, poissons, produits laitiers,...) ou végétale (légumes,...) et sont issus de l'industrie agro-alimentaire, des commerces d'alimentation et de restauration, de la restauration collective ou des particuliers. Ces déchets organiques biodégradables sont généralement emballés et souvent périmés.

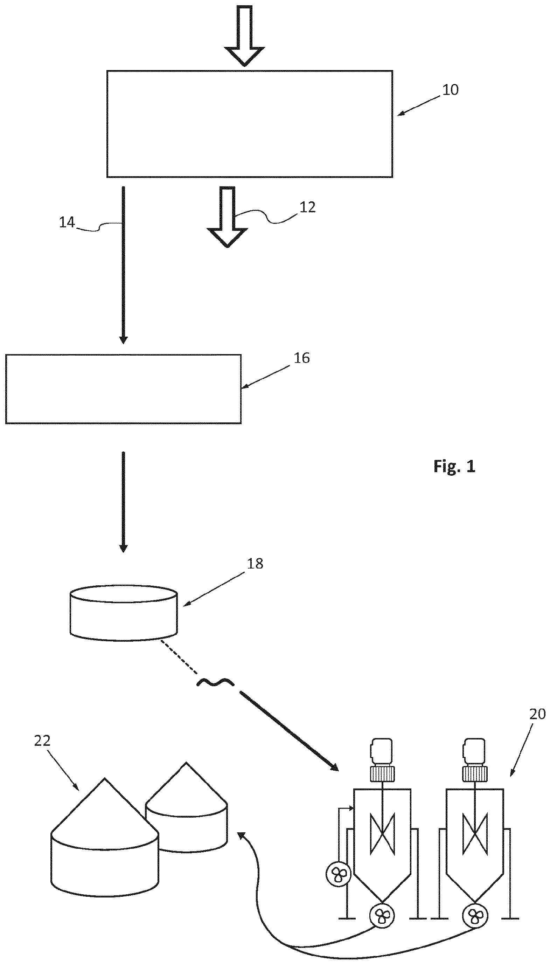

Selon un procédé de traitement illustré sur la figure 1, les déchets organiques sont introduits dans un déconditionneur mécanique 10 qui broie les déchets organiques et sépare la matière organique des résidus d'emballages 12 pour produire une soupe organique 14 destinée à être valorisée en digestion anaérobie.

Après cette phase de déconditionnement, la soupe organique comprend encore de nombreux indésirables (fragments d'emballages) et passe au travers d'un crible 16 avec une maille de 10 mm. Après cette phase de criblage, la soupe organique est stockée dans un réservoir de stockage intermédiaire 18. Après avoir été préparée (pesée, chauffée, dosée,...) dans une unité de préparation 20, la soupe organique est introduite dans une unité de méthanisation 22 pour produire du biogaz. Après cette phase de digestion, les résidus de méthanisation, appelés digestats de méthanisation, sont épandus en raison de leurs propriétés fertilisantes sur les terres agricoles suivant un plan d'épandage bien défini.

Les indésirables qui ne se dégradent pas lors de la phase de méthanisation sont retrouvés dans le digestat épandu et sont gênants pour les terres agricoles.

Le document US2010267102 décrit un dispositif de traitement de déchets organiques biodégradables utilisant la méthanisation. Il comprend un système d'ouverture de sacs, un pulpeur, une unité de méthanisation. Dans le pulpeur, les déchets sont mélangés avec de l'eau chaude puis ce mélange est mixé. A la sortie du pulpeur, le mélange passe à travers une grille pour retirer les contaminants puis dans un hydrocyclone pour retirer le sable avant d'être introduit dans l'unité de méthanisation. Ce dispositif est relativement complexe et ne permet pas de retirer les restes d'emballages de petites tailles. Le document WO 03/043939 A2 décrit un procédé de traitement de déchets organiques qui comprend une étape de séparation de phase dans une presse à vis, l'opération étant cependant réalisée sans chauffage préalable de la soupe organique.

La présente invention vise à remédier aux inconvénients de l'art antérieur en réduisant fortement la teneur des indésirables dans le digestat de méthanisation.

A cet effet, l'invention a pour objet un procédé de traitement de déchets organiques qui comprend une étape de déconditionnement mécanique afin de produire une soupe organique brute et une étape de méthanisation pour produire un biogaz et un digestat de méthanisation. Selon l'invention, le procédé comprend une étape de chauffage de la soupe organique brute, afin de produire une soupe organique chauffée, et une étape de séparation de phase de la soupe organique chauffée en la faisant passer à travers une presse à vis afin d'obtenir une soupe organique finale adaptée à l'étape de méthanisation.

Selon l'invention, la combinaison du chauffage et du passage à travers une presse à vis favorise l'extraction des indésirables de la soupe organique et permet d'obtenir in fine un digestat de méthanisation sans quasiment aucun indésirable (plastique, carton, aluminium, sable, verre, acier,...). Selon un autre avantage, la combinaison des étapes de chauffage et de séparation de phase permet de réduire le tonnage des indésirables en limitant la quantité de matière graisseuse et fibreuse dans les indésirables (ou refus) issus de la séparation de phase. Enfin, elle permet d'augmenter la concentration en matière organique de la soupe organique destinée à la méthanisation.

L'invention a également pour objet un dispositif pour la mise en œuvre du procédé de l'invention.

D'autres caractéristiques et avantages ressortiront de la description qui va suivre de l'invention, description donnée à titre d'exemple uniquement, en regard des dessins annexés sur lesquels :
- La figure 1 est un schéma d'un dispositif de traitement des déchets organiques biodégradables qui illustre un mode de réalisation de l'art antérieur,
- La figure 2 est un schéma d'un dispositif de traitement des déchets organiques biodégradables qui illustre un mode de réalisation de l'invention,
- La figure 3 est une vue en perspective d'une partie d'un cylindre d'une presse à vis qui illustre un mode de réalisation de l'invention, et
- La figure 4 est une coupe transversale d'une fente du cylindre visible sur la figure 3.

Conformément à l'invention, le procédé de traitement des déchets organiques comprend une étape de déconditionnement mécanique. A cet effet, les déchets organiques emballés ou non sont introduits dans un déconditionneur mécanique 24 qui les broie pour extraire la matière organique des emballages. Ainsi, cette étape de déconditionnement mécanique permet de séparer d'une part une soupe organique brute 26 et d'autre part des indésirables 28, appelés déchets inertes banals ou DIB, qui sont traités dans une filière adaptée.

Selon une application, les déchets organiques sont biodégradables et alimentaires.

De préférence, cette soupe organique brute 26 est stockée dans au moins un réservoir de stockage intermédiaire 30 équipé d'un agitateur interne 32 afin de maintenir la soupe organique brute 26 la plus homogène possible et éviter les phénomènes de décantation. Ce réservoir de stockage intermédiaire 30 est calorifugé pour conserver les calories dégagées durant une potentielle pré-fermentation de la soupe organique brute 26.

A titre d'exemple, le réservoir de stockage intermédiaire 30 comprend deux cuves de 80 m³.

La soupe organique brute 26 est ensuite reprise par une pompe centrifuge 34 pour être introduite dans un module de chauffage 36 pour y subir une étape de chauffage.

Ce module de chauffage comprend une cuve de chauffage 38, calorifugée, configurée pour stocker la soupe organique brute 26 et qui présente un système de chauffage 40 pour chauffer la soupe organique brute 26. A titre d'exemple, le système de chauffage est un échangeur dans lequel circule de l'eau chaude.

De préférence, la cuve de chauffage 38 comprend un système d'agitation mécanique 42 et/ou une boucle de recirculation 44 qui comprend un premier piquage 44.1 pour prélever la soupe organique brute 26 en partie inférieure de la cuve de chauffage 38, un deuxième piquage 44.2 pour refouler la soupe organique brute 26 en partie supérieure de la cuve de chauffage 38 et une pompe 44.3 pour faire circuler la soupe organique brute 26 depuis le premier piquage jusqu'au deuxième piquage 44.2.

Le système d'agitation mécanique et/ou la boucle de recirculation 44 ont pour fonction d'homogénéiser la soupe organique à l'intérieur de la cuve de chauffage 38 durant l'étape de chauffage.

Selon un mode de réalisation, la pompe 44.3 qui assure la recirculation est une pompe broyeuse, par exemple une pompe dilacératrice, pour broyer la soupe organique afin de la déstructurer, notamment dans le cas d'une soupe organique fortement fibreuse.

Par déstructurer, on entend que les éléments fibreux sont découpés et que les éventuels « gros » morceaux sont fragmentés.

Selon un mode opératoire, la boucle de recirculation 44 n'est pas utilisée en continu mais en cas de nécessité ou par cycle. Avantageusement, la soupe organique chauffée est homogénéisée avant sa sortie du module de chauffage 36.

Selon une caractéristique de l'invention, durant l'étape de chauffage, la soupe organique est portée à une température supérieure ou égale à 37°C.

Selon un mode opératoire, la soupe organique est maintenue à une température de l'ordre de 70°C pendant environ 1 heure pour l'hygiéniser.

L'étape de chauffage de la soupe organique permet de liquéfier les matières organiques lipidiques contenues dans la soupe organique et de préférence de l'hygiéniser, de l'homogénéiser et de la déstructurer.

De préférence, la cuve de chauffage 38 comprend un fond conique 46 configuré pour concentrer les indésirables lourds présents dans la soupe organique ainsi qu'une purge 48 située à l'extrémité inférieure du fond conique 46 et configurée pour permettre l'extraction des indésirables lourds accumulés dans le fond conique 46. Le chauffage de la soupe organique la rend plus liquide et favorise la décantation des indésirables lourds. De préférence, l'homogénéisation de la soupe organique par agitation et/ou recirculation peut être stoppée pour favoriser la décantation des indésirables « lourds ».

A titre d'exemple, la cuve de chauffage 38 a un volume de l'ordre de 20 m³.

Un système de pesage de la cuve de chauffage 38 permet d'établir un suivi des masses de soupe organique chauffée et hygiénisée.

La soupe organique chauffée 50 est reprise par une pompe 52 pour alimenter un module de séparation de phase. Selon un mode de réalisation, le module de séparation de phase est une presse à vis 54 mécanique.

La presse à vis 54 comprend un cylindre 56 avec des orifices traversant, une alimentation 58 prévue à une première extrémité du cylindre 56, une sortie 60 prévue à une deuxième extrémité du cylindre 56 et une vis 62 positionnée dans le cylindre 56 et coaxiale au cylindre 56, configurée pour acheminer la soupe organique chauffée 50 de l'alimentation 58 vers la sortie 60. La sortie comprend une réduction de passage et un clapet faiblement espacé de la sortie 60 permettant la formation d'un bouchon. Ainsi, la rotation de la vis 62 provoque la compression de la soupe organique chauffée 50. Pour assurer la séparation de phase, la soupe organique chauffée 50 est soumise à une pression dans la presse à vis 54 comprise entre 0,2 et 6 bars. De préférence, cette pression est de l'ordre de 2 bars.

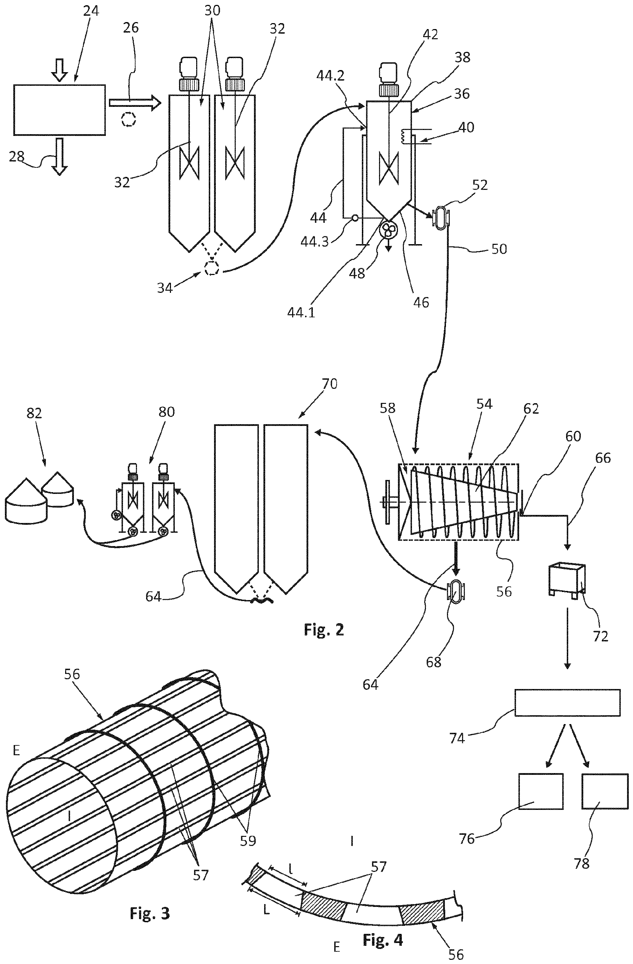

Avantageusement, les orifices traversant la paroi du cylindre 56 sont oblongs, la grande dimension de la forme oblongue étant parallèle à l'axe du cylindre 56. Selon une configuration, les orifices s'étendent sur quasiment toute la longueur du cylindre 56 et se présentent sous la forme de fentes 57 longitudinales (parallèles à l'axe du cylindre 56 et de la vis 62) réparties sur la périphérie du cylindre 56. Pour obtenir un bon compromis pour la séparation de phase, les fentes 57 ont une largeur (dimension prise selon une direction perpendiculaire à l'axe du cylindre) comprise entre 1 et 3 mm et de préférence de l'ordre de 2mm. L'écartement entre deux fentes 57 successives est supérieur ou égal à 2 mm. Le cylindre 56 comprend une pluralité de cercles 59 pour résister à la pression et limiter sa déformation. Avantageusement, comme illustré sur la figure 4, chaque fente 57 a une section de passage qui augmente de l'intérieur I vers l'extérieur E du cylindre 56. En d'autres termes, la section de passage à l'intérieur de la fente augmente progressivement vers l'extérieur de la fente.

Selon un mode opératoire, le débit d'alimentation est de l'ordre de 40 m³/h. Ce débit est supérieur à celui de l'étape de chauffage pour assurer un traitement rapide de la soupe organique chauffée 50 en sortie du module de chauffage 36 et limiter son refroidissement.

De même, en sortie du module de chauffage 36, la soupe organique chauffée 50 est reprise directement par le module de séparation de phase pour limiter le refroidissement de ladite soupe organique chauffée.

Le module de séparation de phase permet de séparer la soupe organique chauffée 50 en une soupe organique finale 64, qui passe à travers le cylindre 56 et en indésirables 66 tels que les déchets inertes banals, qui étaient encore présents dans la soupe organique chauffée 50.

Le fait de chauffer la soupe organique 50 préalablement à son introduction dans la presse à vis 54 a pour effet :
- de ramollir les « gros » morceaux organiques présents dans la soupe organique pour leur permettre de passer à travers la presse à vis 54,
- de liquéfier les matières lipidiques présentes dans la soupe organique chauffée 50, notamment les matières lipidiques saturées, ce qui favorise l'extraction des indésirables 66 et tend à augmenter la concentration de la soupe organique finale 64.

La soupe organique finale 64 est reprise par une pompe 68 pour alimenter au moins un réservoir de stockage final 70, configuré pour stocker la soupe organique finale 64 en attente d'une éventuelle méthanisation et calorifugé pour conserver la température élevée de la soupe organique finale 64 afin de pas perdre d'énergie et d'éviter de réchauffer la soupe organique finale avant une étape de méthanisation. A titre d'exemple, le réservoir de stockage final 70 comprend deux cuves de 100 m³.

La soupe organique finale 64 a les caractéristiques suivantes :
- elle est homogène et fluide (grâce notamment au chauffage),
- elle a une siccité de 6% à 95% de matière sèche organique,
- elle comprend une quantité infime de matière plastique,
- elle a un pH compris entre 3,5 et 6.

| | Siccité (%) | Pourcentage de matière organique | Criblage 4 mm de la soupe organique finale | | Consommation d'eau durant le procédé |
|---|---|---|---|---|---|
| | | | plastiques | Autres : Aluminium, cartons, ... | |
| Soupe organique finale selon l'art antérieur | 7 | 87 | ++ | ++ | Importante |
| Soupe organique finale selon l'invention | **6** | 95 | Presque nul | Néant | Faible |

Concernant les indésirables 66 récupérés, ils sont collectés dans un bac 72 pour être valorisés, par exemple en les séchant dans une unité de séchage 74 pour réduire leur masse puis en les incinérant dans une chaudière biomasse spécifique 76 pour produire de la chaleur. En variante, après séchage, ils peuvent être évacués vers un centre de traitement 78 adapté pour les déchets inertes banals ou DIB.

Les indésirables solides 66 représentent moins de 5% en poids de la soupe organique chauffée 50 introduite dans la presse à vis 54.

| | Proportion massique (hors indésirables issus du déconditionneur) | Siccité | Aspect | Facilité de séchage et/ou de valorisation |
|---|---|---|---|---|
| Indésirables selon un procédé de l'art antérieur | 15-20 % | 18,5 % | Humide et collant en raison de la présence de graisses | Difficile |
| Indésirables selon le procédé de l'invention | 5 % | 43 % | Sec | Plus facile |

En sortie du réservoir de stockage final 70, la soupe organique finale 64 est introduite, après avoir été préparée dans une unité de préparation 80, dans une unité de méthanisation 82 pour produire du biogaz. Après cette étape de méthanisation, le digestat de méthanisation peut être épandu.

Selon l'invention, la soupe organique finale 64, chauffée et pressée permet de produire une plus grande quantité de biogaz, enrichi en méthane lors de l'étape de méthanisation.

## Revendications

1. Procédé de traitement de déchets organiques comprenant une étape de déconditionnement mécanique afin de produire une soupe organique brute (26) et une étape de méthanisation pour produire un biogaz et un digestat de méthanisation, **caractérisé en ce qu'**il comprend une étape de chauffage de la soupe organique brute (26) afin de produire une soupe organique chauffée (50) portée à une température supérieure ou égale à 37°C et une étape de séparation de phase de la soupe organique chauffée (50) en la faisant passer à travers une presse à vis (54) présentant un cylindre (56) avec des orifices traversant pour séparer la soupe organique chauffée (50) en une soupe organique finale (64) adaptée pour l'étape de méthanisation qui passe à travers le cylindre (56) et en indésirables (66), la soupe organique chauffée (50) étant soumise à une pression comprise entre 0,2 bar et 6 bars dans la presse à vis (54).

2. Procédé de traitement selon la revendication 1, **caractérisé en ce que**, pendant l'étape de chauffage, la soupe organique brute (26) est maintenue à une température de l'ordre de 70°C pendant environ 1 heure.

3. Procédé de traitement selon la revendication 1 ou 2, **caractérisé en ce que** le débit d'alimentation de la presse à vis (54) est supérieur à celui de l'étape de chauffage pour assurer un traitement rapide de la soupe organique chauffée (50) en sortie du module de chauffage (36) et limiter son refroidissement.

4. Procédé de traitement selon l'une des revendications précédentes, **caractérisé en ce que**, pendant l'étape de chauffage, la soupe organique brute (26) est déstructurée en passant à travers une pompe broyeuse.

5. Procédé de traitement selon l'une des revendications précédentes, **caractérisé en ce que**, pendant l'étape de chauffage, la soupe organique brute (26) est soumise à un phénomène de décantation afin d'isoler des indésirables lourds.

6. Procédé de traitement selon l'une des revendications précédentes, **caractérisé en ce que**, dans la presse à vis (54), la soupe organique chauffée (50) passe au travers d'un cylindre (56) avec des orifices oblongs avec une largeur comprise entre 1 et 3 mm.

7. Dispositif de traitement des déchets organiques pour la mise en œuvre du procédé selon l'une des revendications précédentes, ledit dispositif comprenant un déconditionneur mécanique (24), une unité de méthanisation (82), **caractérisé en ce qu'**il comprend un module de chauffage (36) pour chauffer une soupe organique brute (26) sortant du déconditionneur mécanique (54) et un module de séparation de phase comportant une presse à vis (54) présentant un cylindre (56) avec des orifices traversant et étant configurée pour séparer la soupe organique chauffée (50) en une soupe organique finale (64) adaptée pour l'étape de méthanisation qui passe à travers le cylindre (56) et en indésirables (66) présents dans la soupe organique chauffée (50) sortant du module de chauffage (36).

8. Dispositif de traitement selon la revendication précédente, **caractérisé en ce que** le module de chauffage (36) comprend une cuve de chauffage (38) calorifugée qui comprend un système de chauffage (40) ainsi qu'un système d'agitation mécanique (42) et/ou une boucle de recirculation (44).

9. Dispositif de traitement selon la revendication 7 ou 8, **caractérisé en ce que** la cuve de chauffage (38) comprend un fond conique (46) configuré pour concentrer des indésirables lourds présents dans la soupe organique brute (26) ainsi qu'une purge (48) située à l'extrémité inférieure du fond conique (46) et configurée pour permettre l'extraction des indésirables lourds accumulés dans le fond conique(46).

10. Dispositif de traitement selon l'une des revendications 7 à 9, **caractérisé en ce que** le module de chauffage (36) comprend une pompe broyeuse.

11. Dispositif selon l'une des revendications 7 à 10, **caractérisé en ce que** la presse à vis comprend un cylindre (56) qui présente des orifices oblongs avec une largeur comprise entre 1 et 3 mm.

12. Dispositif selon la revendication précédente, **caractérisé en ce que** les orifices oblongs s'étendent sur quasiment toute la longueur du cylindre (56) et se présentent sous la forme de fentes (57) longitudinales.

13. Dispositif selon la revendication précédente, **caractérisé en ce que** l'écartement entre deux fentes (57) successives est supérieur ou égal à 2 mm.

14. Dispositif selon la revendication 11 ou 12, **caractérisé en ce que** le cylindre (56) comprend une pluralité de cercles (59) pour résister à la pression et limiter sa déformation.

15. Dispositif selon l'une des revendications 12 à 14, **caractérisé en ce que** chaque fente (57) a une section de passage qui augmente de l'intérieur vers l'extérieur du cylindre (56).

## Patentansprüche

1. Verfahren zur Behandlung von organischem Abfall, das einen mechanischen Dekonditionierungsschritt zur Erzeugung einer rohen organischen Suppe (26) und einen Methanisierungsschritt zur Erzeugung eines Biogases und eines Methanisierungsgärgutes umfasst, **dadurch gekennzeichnet, dass** es einen Aufwärmschritt der rohen organischen Suppe (26) zur Erzeugung einer organischen Suppe (50) umfasst, die auf eine Temperatur größer oder gleich 37°C aufgewärmt ist, und einen Phasentrennschritt der aufgewärmten organischen Suppe (50) durch Hindurchleiten durch eine Schneckenpresse (54) umfasst, die einen Zylinder (56) mit Durchführungen umfasst, um die aufgewärmte organische Suppe (50) in eine für den Methanisierungsschritt geeignete und durch den Zylinder (56) hindurchtretende finale organische Suppe(64) und in unerwünschte Bestandteile (66) zu trennen, wobei die aufgewärmte organische Suppe (50) in der Schneckenpresse (54) einem Druck zwischen 0,2 bar und 6 bar ausgesetzt ist.

2. Verfahren zur Behandlung nach Anspruch 1, **dadurch gekennzeichnet, dass** die rohe organische Suppe (26) während des Aufwärmschrittes während ungefähr 1 Stunde auf einer Temperatur in der Größenordnung von 70°C gehalten wird.

3. Verfahren zur Behandlung nach Anspruch 1 oder 2, **dadurch gekennzeichnet, dass** die Fördermenge der Schneckenpresse (54) größer als diejenige des Aufwärmeschritts ist, um eine schnelle Behandlung der aufgewärmten organischen Suppe (50) am Ausgang des Aufwärmmoduls (36) zu gewährleisten und deren Abkühlung zu begrenzen.

4. Verfahren zur Behandlung nach einem der vorhergehenden Ansprüche, **dadurch gekennzeichnet, dass** die rohe organische Suppe (26) während des Aufwärmschrittes durch Hindurchlaufen durch eine Zerkleinerungspumpe destrukturiert wird.

5. Verfahren zur Behandlung nach einem der vorhergehenden Ansprüche, **dadurch gekennzeichnet, dass** die rohe organische Suppe (26) während des Aufwärmschrittes einem Absetzvorgang unterzogen wird, um schwere unerwünschte Bestandteile zu isolieren.

6. Verfahren zur Behandlung nach einem der vorhergehenden Ansprüche, **dadurch gekennzeichnet, dass** die aufgewärmte organische Suppe (50) in der Schneckenpresse (54) einen Zylinder (56) mit länglichen Öffnungen mit einer Breite zwischen 1 und 3 mm durchläuft.

7. Vorrichtung zur Behandlung organischer Abfälle zur Durchführung des Verfahrens nach einem der vorhergehenden Ansprüche, wobei die Vorrichtung einen mechanischen Dekonditionierer (24)und eine Methanisierungseinheit (82) umfasst, **dadurch gekennzeichnet, dass** diese ein Heizmodul (36) zum Aufwärmen einer rohen organischen Suppe (26) aufweist, die den mechanischen Dekonditionierer (54) verlässt, und ein Phasentrennungsmodul aufweist, das eine Schneckenpresse (54) umfasst, die einen Zylinder (56) mit Durchführungen aufweist und die dazu eingerichtet ist, die aufgewärmte organische Suppe (50) in eine für den Methanisierungsschritt geeignete und durch den Zylinder (56) hindurchtretende finale organische Suppe (64) und in unerwünschte Bestandteile (66) zu trennen, die in der aufgewärmten organischen Suppe (50) vorhanden sind, die das Heizmodul (36) verlässt.

8. Behandlungsvorrichtung nach dem vorhergehenden Anspruch, **dadurch gekennzeichnet, dass** das Heizmodul (36) einen wärmegedämmten Heizbehälter (38) umfasst, der ein Heizsystem (40) sowie ein mechanisches Rührsystem (42) und/oder eine Rezirkulationsschleife (44) aufweist.

9. Behandlungsvorrichtung nach Anspruch 7 oder 8, **dadurch gekennzeichnet, dass** das Heizbehälter (38) einen konischen Boden (46) aufweist, der dazu eingerichtet ist, schwere unerwünschte Bestandteile, die in der rohen organischen Suppe (26) vorhanden sind, zu konzentrieren, sowie einen Abfluss (48) aufweist, der sich am unteren Ende des konischen Bodens (46) befindet und der dazu eingerichtet ist, die Entfernung von schweren unerwünschten Bestandteile, die sich in dem konischen Boden (46) angesammelt haben, zu ermöglichen.

10. Behandlungsvorrichtung nach einem der Ansprüche 7 bis 9, **dadurch gekennzeichnet, dass** das Heizmodul (36) eine Zerkleinerungspumpe umfasst.

11. Vorrichtung nach einem der Ansprüche 7 bis 10, **dadurch gekennzeichnet, dass** die Schneckenpresse einen Zylinder (56) umfasst, der längliche Öffnungen mit einer Breite zwischen 1 und 3 mm aufweist.

12. Vorrichtung nach dem vorhergehenden Anspruch, **dadurch gekennzeichnet, dass** sich die länglichen Öffnungen im Wesentlichen über die gesamte Länge des Zylinders (56) erstrecken und als Längsschlitze (57) ausgebildet sind.

13. Vorrichtung nach dem vorhergehenden Anspruch, **dadurch gekennzeichnet, dass** der Abstand zwischen zwei aufeinanderfolgenden Schlitzen (57) größer als oder gleich 2 mm ist.

14. Vorrichtung nach Anspruch 11 oder 12, **dadurch gekennzeichnet, dass** der Zylinder (56) eine Vielzahl von Ringen (59) aufweist, um den Druck aufzunehmen und um seine Verformung zu begrenzen.

15. Vorrichtung nach einem der Ansprüche 12 bis 14, **dadurch gekennzeichnet, dass** jeder Schlitz (57) einen von der Innenseite zur Außenseite des Zylinders (56) zunehmenden Durchgangsquerschnitt aufweist.

## Claims

1. Method for processing organic wastes, comprising a mechanical deconditioning step in order to produce a crude organic soup (26), and a methanization step so as to produce a biogas and a methanization digestate, **characterized in that** it comprises a step of heating the crude organic soup (26) in order to produce a heated organic soup (50), brought to a temperature of greater than or equal to 37°C, and a step of phase separation of the heated organic soup (50) by passing it through a screw press (54) having a cylinder (56) with through-going orifices, so as to separate the heated organic soup (50) into a final organic soup (64) suitable for the methanization step, which passes through the cylinder (56), and into undesirables (66), the heated organic soup (50) being subjected to a pressure of between 0.2 bar and 6 bar in the screw press (54).

2. Processing method according to Claim 1, **characterized in that** during the heating step, the crude organic soup (26) is maintained at a temperature of the order of 70°C for about 1 hour.

3. Processing method according to Claim 1 or 2, **characterized in that** the feed rate of the screw press (54) is greater than that of the heating step, so as to ensure rapid treatment of the heated organic soup (50) at the exit from the heating module (36) and to limit its cooling.

4. Processing method according to one of the preceding claims, **characterized in that** during the heating step, the crude organic soup (26) is destructured by passage through a macerator pump.

5. Processing method according to one of the preceding claims, **characterized in that** during the heating step, the crude organic soup (26) is subjected to a decanting process in order to isolate heavy undesirables.

6. Processing method according to one of the preceding claims, **characterized in that** in the screw press (54), the heated organic soup (50) passes through a cylinder (56) with oblong orifices with a width of between 1 and 3 mm.

7. Apparatus for processing organic wastes, for the implementation of the method according to one of the preceding claims, said apparatus comprising a mechanical deconditioner (24), a methanization unit (82), **characterized in that** the apparatus comprises a heating module (36) so as to heat a crude organic soup (26) exiting the mechanical deconditioner (54), and a phase separation module comprising a screw press (54) having a cylinder (56) with through-going orifices and being configured so as to separate the heated organic soup (50) into a final organic soup (64), suitable for the methanization step, which passes through the cylinder (56), and into undesirables (66), which are present in the heated organic soup (50) exiting the heating module (36).

8. Processing apparatus according to the preceding claim, **characterized in that** the heating module (36) comprises a thermally insulated heating tank (38) which comprises a heating system (40), and also a mechanical stirring system (42) and/or a recirculation loop (44).

9. Processing apparatus according to Claim 7 or 8, **characterized in that** the heating tank (38) comprises a conical base (46) configured so as to concentrate heavy undesirables present in the crude organic soup (26), and a purge (48) which is situated at the bottom end of the conical base (46) and is configured so as to allow the extraction of the heavy undesirables accumulated in the conical base (46).

10. Processing apparatus according to one of Claims 7 to 9, **characterized in that** heating module (36) comprises a macerator pump.

11. Apparatus according to one of Claims 7 to 10, **characterized in that in that** the screw press comprises a cylinder (56) which has oblong orifices with a width of between 1 and 3 mm.

12. Apparatus according to the preceding claim, **characterized in that** the oblong orifices extend over virtually the entire length of the cylinder (56) and take the form of lengthwise slots (57).

13. Apparatus according to the preceding claim, **characterized in that** the spacing between two successive slots (57) is greater than or equal to 2 mm.

14. Apparatus according to Claim 11 or 12, **characterized in that** the cylinder (56) comprises a plurality of rings (59) for resisting pressure and limiting its deformation.

15. Apparatus according to one of Claims 12 to 14, **characterized in that** each slot (57) has a passage cross section which increases from the inside to the outside of the cylinder (56).
